## Europäisches Patentamt
## European Patent Office
## Office européen des brevets

(19)

(11) Veröffentlichungsnummer: **0 016 407**
**B1**

(12) **EUROPÄISCHE PATENTSCHRIFT**

(45) Veröffentlichungstag der Patentschrift: **26.10.83**

(21) Anmeldenummer: **80101261.8**

(22) Anmeldetag: **12.03.80**

(51) Int. Cl.³: **G 03 C 11/02,**
**G 03 B 21/132**

(54) **Transparentfolie für die Overhead-Projektion.**

(30) Priorität: **26.03.79 DE 2911798**

(43) Veröffentlichungstag der Anmeldung:
**01.10.80 Patentblatt 80/20**

(45) Bekanntmachung des Hinweises auf die Patenterteilung:
**26.10.83 Patentblatt 83/43**

(84) Benannte Vertragsstaaten:
**AT BE CH FR GB IT LU NL SE**

(56) Entgegenhaltungen:
**CH - A - 553 068**
**DE - A - 2 306 419**
**DE - A - 2 751 122**
**DE - B - 1 805 292**
**DE - B - 2 164 512**
**US - A - 3 963 338**

(73) Patentinhaber: **Pelikan Aktiengesellschaft**
**Podbielskistrasse 141**
**D-3000 Hannover 1 (DE)**

(72) Erfinder: **Mecke, Norbert, Dr. Dipl.-Chem.**
**Schieferkamp 3b**
**D-3000 Hannover 91 (DE)**
Erfinder: **Schmitt, Franz-Ullrich, Dr. Dipl.-Chem.**
**Sporstrasse 4**
**D-3000 Hannover 1 (DE)**
Erfinder: **Schrader, Karl-Heinz**
**Tiergartenstrasse 17 A**
**D-3000 Hannover 73 (DE)**
Erfinder: **Butschkau, Heinke (geb. Wolf)**
**Parsevalstrasse 27**
**D-3000 Hannover 1 (DE)**

(74) Vertreter: **Eikenberg & Brümmerstedt**
**Patentanwälte**
**Schackstrasse 1**
**D-3000 Hannover 1 (DE)**

Courier Press, Leamington Spa, England.

**0 016 407**

Transparentfolie für die Overhead-Projektion.

Als Bildträger für die Overhead-Projektion werden transparente Kunststoff-Folien benutzt, und die zu vermittelnden Informationen in Gestalt schriftlicher oder zeichnerischer Markierungen werden mit einem Markierungsgerät (z. B. einem Schreib- oder Zeichenstift) auf die Folie aufgebracht. Da die Overhead-Projektion im Normalfall als Tageslichtprojektion durchgeführt wird, d.h. in nicht abgedunkelten Räumen stattfindet, müssen diese Markierungen besonders gut lesbar sein. Es hat sich gezeigt, daß die beste Lesbarkeit dann erzielt wird, wenn eine helle gelbe Markierung auf einem dunklen blauen Untergrund steht.

Die DE—OS 27 51 122 beschreibt eine Anordnung zum Erzeugen gelber Markierungen auf einem blauen Untergrund. Die dabei verwendete Folie ist mit einer Beschichtung versehen, welche mit mindestens einem Indikatorfarbstoff vorzugsweise aus der Sulfonphthaleinreihe eingefärbt ist. Diese Farbstoffe sind im alkalischen Bereich blau, im sauren Bereich gelb. Der Farbumschlag von Blau zu Gelb erfolgt durch Markieren der beschichteten Folienseite mit einer sauer eingestellten Markierungsflüssigkeit, die beispielsweise in einem Filzschreiber enthalten ist. Diese bekannte Anordnung hat sich im Prinzip auch gut bewährt, weist aber den Nachteil auf, daß die Farbstoffe auch auf Handschweiß reagieren können.

Aufgabe der Erfindung ist es, für die Overhead-Projektion eine verbesserte Anordnung zum Erzeugen hellfarbiger, vorzugsweise gelber Markierungen auf einem dunkelfarbigen, vorzugsweise blauen Untergrund zur Verfügung zu stellen, bei der die Empfindlichkeit gegenüber Handschweiß beseitigt ist.

Ausgehend von einer Anordnung aus einer Transparentfolie, die mit einer einen dunklen Farbstoff enthaltenden Beschichtung versehen ist, und einem Markierungsgerät, das eine mit dem Farbstoff reagierende Markierungsflüssigkeit enthält, wird diese Aufgabe erfindungsgemäß dadurch gelöst, daß als dunkler Farbstoff in der Beschichtung ein reduzierbarer Farbstoff oder ein entwickelter Farbbildner sowie als Markierungsflüssigkeit eine den dunklen Farbstoff in den vollständig farblosen Zustand überführende Flüssigkeit vorgesehen sind und daß innerhalb der Anordnung ein zweiter, heller Farbstoff vorliegt, der gegenüber der Markierungsflüssigkeit inert ist.

Bei der Erfindung ist somit in der Folie ein Zweifarbstoffsystem vorhanden, das aus einem chemisch bleichbaren dunklen Farbstoff und einem nicht bleichbaren hellen Farbstoff so zusammengesetzt ist, daß der dunkle Farbstoff mittels der Markierungsflüssigkeit in den vollständig farblosen Zustand überführt und gleichzeitig der helle Farbstoff an den markierten Stellen sichtbar gemacht wird. Dieses Zweifarbstoffsystem unterscheidet sich von den bekannten, nur Indikatorfarbstoffe als einzige Farbstofftype enthaltenden System vorteilhaft darin, daß der bleichbare dunkle Farbstoff auf ein schwach saures Milieu, wie es im Handschweiß vorliegt, nicht anspricht. Der dunkle Farbstoff wird auch nicht mit Säuren gebleicht, sondern mit ihm zugeordneten, in der Farbstoffchemie an sich bekannten Bleichmitteln als Markierungsflüssigkeit.

Der gegenüber der Markierungsflüssigkeit inerte helle Farbstoff kann sowohl in der Beschichtung der Transparentfolie als auch in der Markierungsflüssigkeit enthalten sein. Schließlich kann auch die Transparentfolie mit einem derartigen Farbstoff eingefärbt sein.

Als bleichbarer dunkler Farbstoff sind bei der Erfindung zwei Varianten vorgesehen, die in der Art des Farbstoffs und der Bleichreaktion voneinander verschieden sind. In der ersten Variante ist als dunkler Farbstoff ein reduzierbarer Farbstoff, vorzugsweise ein Triarylmethanfarbstoff eingesetzt, und die Markierungsflüssigkeit ist eine reduzierende Flüssigkeit, vorzugsweise eine Sulfitlösung. In der zweiten Variante ist als dunkler Farbstoff ein entwickelter Farbbildner, vorzugsweise ein System auf der Basis Kristallviolett/Bispenol eingesetzt, und die Markierungsflüssigkeit ist eine polare Flüssigkeit, vorzugsweise ein Glykol.

Bei der ersten Variante, also bei Verwendung von reduzierbaren Farbstoffen wird die Beschichtung der Folie vorzugsweise aus wäßriger bindemittelhaltiger Lösung vorgenommen, wobei als Bindemittel für die dunkle Farbschicht Polyvinylalkohol oder ein anderes transparent auftrocknendes Bindemittel bzw. eine Dispersion verwendet wird. Zur besseren Haftung der Polyvinylalkoholschicht auf der Folie kann vorher eine Haftschicht aus Polyvinylacetat aufgetragen werden.

Als reduzierbare Farbstoffe können alle Farbstoffe eingesetzt werden, die mit reduzierenden Substanzen entfärbbar sind. Bevorzugt sind die zur Herstellung löschbarer Tinten dienenden Triarylmethanfarbstoffe, wie z. B. Tintenblau (Acid Blue 93), weil die Folie dann mit ohnehin handelsüblichen Tintenlöschstiften (die meistens eine farblose Sulfitlösung enthalten) beschriftet werden kann. Diese Möglichkeit, kein besonderes, hell eingefärbtes Markierungsgerät vorsehen zu müssen, setzt natürlich voraus, daß der inerte helle Farbstoff sich in der Folie oder der Haftschicht oder der dunkel eingefärbten Beschichtung befindet.

Es hat sich ein Verhältnis heller Farbstoff:dunkler Farbstoff von 1:5 bis 1:10 als zweckmäßig erwiesen. Dieses Verhältnis kann auch größer oder kleiner als 1:5 bis 1:10 sein und ist abhängig von den verwendeten Farbstoffen (rotstichiges Gelb, grünstichiges Gelb) sowie von subjektiven ästhetischen Gesichtspunkten. Die Auswahl des hellen Farbstoffes wird nur durch die Forderungen begrenzt, daß er nicht reduzierbar sein darf und daß er in seinem jeweiligen Medium ausreichend löslich sein muß.

2

# 0 016 407

Im Falle der zweiten Variante wird die Beschichtung der Folie mit der den entwickelten Farbbildner enthaltenden dunklen Farbschicht mittels einer in organischen Lösungsmitteln gelösten Beschichtungsmasse vorgenommen, wobei als Bindemittel alle in organischen Lösungsmitteln löslichen, transparent auftrocknenden Bindemittel geeignet sind. Eine Haftschicht ist in der Regel nicht notwendig.

Der Farbbildner ist vorzugsweise Kristallviolettlacton, das mit Bisphenol entwickelt ist und mit polaren Lösungsmittel in den farblosen Zustand überführt werden kann. In den Fällen, in denen keine eingefärbte Haftschicht bzw. eine farbige Folie oder ein den hellen Farbstoff enthaltender Löschstift verwendet wird, befindet sich der helle Farbstoff in der Beschichtungsmasse. Als heller Farbstoff können praktisch alle handelsüblichen lösungsmittellöslichen Farbstoffe eingesetzt werden, da sie alle gegen polare Lösungsmittel stabil sind. Solche Folien werden mit Schreibstiften markiert, die Glycerin, Glykole oder andere polare Lösungsmittel als Markierungsflüssigkeit enthalten.

Die Beschichtungsgewichte der farbigen Schichten auf der Overhead-Folie liegen vorzugsweise zwischen 0,5 bis 6 g/m². Die Dicke der Haftschicht (sofern vorhanden) liegt vorzugsweise zwischen 0,1 und 0,5 g/m².

Eine Korrektur der erzeugten Markierungen ist bei einer Folie mit einem entwickelten Farbbildner ohne weiteres möglich, und zwar mit einem Schreibstift, der in einem Lösungsmittel gelöstes Bisphenol als Korrekturflüssigkeit enthält.

Bedingt kann auch bei einer Folie mit reduzierbarem Farbstoff eine Korrektur vorgenommen werden, in welchem Falle der Schreibstift eine verdünnte Säure wie Essigsäure enthält. Die Korrekturstelle geht dabei aber nicht exakt wieder auf die ursprüngliche dunkle Farbe zurück.

Die nachfolgenden Beispiele geben einige Rezepturen der Folienbeschichtungen an und dienen zur Erläuterung der Erfindung.

## Beispiel 1

*Haftschicht*

| | |
|---|---|
| Äthylacetat | 44,9 Gew.-Teile |
| Äthylalkohol | 49,9 Gew.-Teile |
| Copolymerisat aus Vinylacetat und Maleinsäure-di-n-butylester | 5,0 Gew.-Teile |
| Solvent Yellow 82 (CI:18690) | 0,1 Gew.-Teile |

*Farbschicht*

| | |
|---|---|
| Wasser | 44,0 Gew.-Teile |
| Äthylalkohol | 44,5 Gew.-Teile |
| Teilverseifter Polyvinylalkohol mit hohem Acetatanteil | 10,0 Gew.-Teile |
| Acid Blue 93 (CI:42780) | 1,0 Gew.-Teile |

Nach Auftrag beider Schichten auf z. B. eine Polyesterfolie ergibt sich eine intensiv blaue Overhead-Folie, die mit einem handelsüblichen Tintenlöschstift gelb markiert werden kann.

3

0 016 407

## Beispiel 2

*Haftschicht*

Wie unter 1, nur ohne Solvent Yellow 82

*Farbschicht*

| | |
|---|---|
| Wasser | 44,2 Gew.-Teile |
| Äthylalkohol | 45,0 Gew-Teile |
| Teilverseifter Polyvinylalkohol mit hohem Acetatanteil | 10,0 Gew.-Teile |
| Acid Green 25 (CI:61570) | 0,2 Gew.-Teile |
| Basic Violet 21 (keine CI-Nummer) | 0,6 Gew.-Teile |

Man erhält eine violette Folie, die nach Markieren mit einem Tintenlöschstift eine grüne Schrift zeigt.

## Beispiel 3

*Haftschicht*

Wie unter 1, nur ohne Solvent Yellow 82

*Farbschicht*

| | |
|---|---|
| Wasser | 43,9 Gew.-Teile |
| Äthylalkohol | 44,5 Gew.-Teile |
| Teilverseifter Polyvinylalkohol mit hohem Acetatanteil | 10,0 Gew.-Teile |
| Acid Blue 93 | 1,0 Gew.-Teile |
| Acid Yellow 9 (CI:13015) | 0,15 Gew.-Teile |

Man erhält eine blaue Folie, die nach Markierung mit einem Tintenlöschstift eine gelbe Schrift zweigt.

## Beispiel 4

*Farbschicht*

| | |
|---|---|
| Kristallviolettlacton | 1,0 Gew.-Teile |
| Bisphenol A | 2,0 Gew.-Teile |
| Celluloseacetobutyrat | 10,0 Gew,-Teile |
| Äthylacetat | 87,0 Gew.-Teile |
| Solvent Yellow 82 | 0,1 Gew.-Teile |

Dieses Beispiel, bei dem keine Haftschicht benötigt wird, führt zu einer blauen Folie, die nach Markierung mit einem Schreibstift, der Äthylglykol und Glycerin im Verhältnis 1:1 enthält, eine gelbe Schrift zeigt.

4

## Patentansprüche

1. Anordnung zum Erzeugen hellfarbiger, vorzugsweise gelber Markierungen auf einem dunkelfarbigen, vorzugsweise blauen Untergrund für die Overhead-Projektion, bestehend aus einer Transparentfolie, die mit einer einen dunklen Farbstoff enthaltenden Beschichtung versehen ist, und einem Markierungsgerät, das eine mit dem Farbstoff reagierende Markierungsflüssigkeit enthält, dadurch gekennzeichnet, daß als dunkler Farbstoff in der Beschichtung ein reduzierbarer Farbstoff oder ein entwickelter Farbbildner sowie als Markierungsflüssigkeit eine den dunklen Farbstoff in den vollständig farblosen Zustand überführende Flüssigkeit vorgesehen sind und daß innerhalb der Anordnung ein zweiter, heller Farbstoff vorliegt, der gegenüber der Markierungsflüssigkeit inert ist.

2. Anordnung nach Anspruch 1, dadurch gekennzeichnet, daß der inerte helle Farbstoff in der Beschichtung der Transparentfolie vorliegt.

3. Anordnung nach mindestens einem der Ansprüche 1 und 2, dadurch gekennzeichnet, daß die Transparentfolie mit dem inerten hellen Farbstoff eingefärbt ist.

4. Anordnung nach mindestens einem der Ansprüche 1 und 2, dadurch gekennzeichnet, daß der inerte helle Farbstoff der Markierungsflüssigkeit zugesetzt ist.

5. Anordnung nach mindestens einem der Ansprüche 1 bis 4, dadurch gekennzeichnet, daß der dunkle reduzierbare Farbstoff ein Triarylmethanfarbstoff und die Markierungsflüssigkeit eine reduzierende Flüssigkeit, vorzugsweise eine Sulfitlösung ist.

6. Anordnung nach mindestens einem der Ansprüche 1 bis 4, dadurch gekennzeichnet, daß der dunkle entwickelte Farbbildner ein System auf der Basis Kristallviolettlacton/Bisphenol und die Markierungsflüssigkeit eine polare Flüssigkeit, vorzugsweise ein Glykol ist.

## Revendications

1. Dispositif pour produire des marquages de couleur claire, de préférence jaune, sur un fond de couleur foncé, de préférence bleu, pour la projection verticale, consistant en une feuille transparente, qui est pourvue d'un revêtement contenant une matière colorante foncée, et un appareil de marquage qui comporte un liquide réagissant avec la matière colorante, caracterisé en ce que'on prévoit, comme matière colorante foncée dans le revêtement, une matière colorante réductible ou un générateur de couleur développé et, comme liquide de marquage, un liquide réduisant la matière foncée à lètat complètement incolore et en ce que, dans le dispositif, est encore prévu une seconde matière colorante claire qui est inerte à légard du liquide de marquage.

2. Dispositif suivant la revendication 1, caracterisé en ce que la matière colorante claire inerte est présente dans le revêtement de la feuille transparente.

3. Dispositif suivant au moins l'une des revendications 1 et 2, caracterisé en ce que la feuille transparente est coloré avec la matière colorante claire inerte.

4. Dispositif suivant au moins l'une des revendications 1 et 2 caracterisé en ce que la matière colorante claire inerte est ajoutée au liquide de marquage.

5. Dispositif suivant au moins l'une des revendications 1 à 4, caracterisé en ce que la matière colorante foncée réductible est une matière colorante à base de triarylméthane et le liquide de marquage un liquide réducteur, de préférence une solution de sulfite.

6. Dispositif suivant au moins une des revendications 1 à 4, caracterisé en ce que le générateur de couleur développé foncé est un système à base de lactone de violet cristallisé/biphenol et le liquide de marquage in liquide polaire, de préférence un glycol.

## Claims

1. System for producing light-coloured, especially yellow, markings on a dark-coloured, especially blue, background for overhead projection, consisting of a transparent foil which is furnished with a coating containing a dark dye and of a marking device which contains a marking liquid reacting with the dye, characterized in that a reducible dye or a developed dye-former is provided as dark dye in the coating and a liquid which converts the dark dye into the completely colourless state is provided as marking liquid, and that a second, light dye which is inert to the marking liquid is present inside the system.

2. System according to claim 1, characterized in that the inert, light dye is present in the coating of the transparent foil.

3. System according to at least one of claims 1 and 2, characterized in that the transparent foil is dyed with the inert, light dye.

4. System according to at least one of claims 1 and 2, characterized in that the inert, light dye is added to the marking liquid.

5. System according to at least one of claims 1 to 4, characterized in that the dark, reducible dye is a triaryl methane dye and the marking liquid is a reducing liquid, especially a sulphite solution.

6. System according to at least one of claims 1 to 4, characterized in that the dark, developed dye-former is a system on the basis of crystal violet lactone/bisphenol and the marking liquid is a polar liquid, especially a glycol.

6